(19) Europäisches Patentamt / European Patent Office / Office européen des brevets

(11) **EP 4 664 972 A1**

(12) **EUROPEAN PATENT APPLICATION**
published in accordance with Art. 153(4) EPC

(43) Date of publication:
**17.12.2025 Bulletin 2025/51**

(21) Application number: **23920398.7**

(22) Date of filing: **08.02.2023**

(51) International Patent Classification (IPC):
*H04W 24/08* (2009.01)

(52) Cooperative Patent Classification (CPC):
**H04L 5/00; H04W 24/08; H04W 72/044**

(86) International application number:
**PCT/CN2023/075062**

(87) International publication number:
**WO 2024/164190 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Dehns Germany Partnerschaft mbB**
**Theresienstraße 6-8**
**80333 München (DE)**

(54) **METHOD AND APPARATUS FOR DETERMINING CAPABILITY INFORMATION OF TERMINAL, AND STORAGE MEDIUM**

(57) The present disclosure relates to the technical field of communications. Provided are a method and apparatus for determining capability information of a terminal, and a storage medium, which are used for improving the transmission quality of uplink transmission, and improving system transmission throughput. The method comprises: determining that a terminal supports uplink STxMP transmission; determining that the sum of transmission powers of different antenna panels of the terminal, which is under the STxMP transmission, is greater than the maximum transmission power, which is determined on the basis of the power class of the terminal; determining capability information of the terminal, wherein the capability information is used for indicating that the maximum transmission power of each of the plurality of antenna panels of the terminal, which is under the STxMP transmission, supports full-power transmission, and the full power is determined on the basis of a PA capability of each of the plurality of antenna panels or the power class of each of the plurality of antenna panels; and sending the capability information to a network device.

Determine that the terminal supports uplink STxMP — S11

Determine that a sum of transmission powers of different panels of the terminal in the STxMP is higher than a maximum transmission power determined from a power class of the terminal — S12

Determine capability information of the terminal — S13

Send the capability information to a network device — S14

FIG. 4

EP 4 664 972 A1

**Description**

**TECHNICAL FIELD**

The present disclosure relates to a field of communication technology, and in particular, to methods and apparatuses for determining capability information of a terminal, and a storage medium.

**BACKGROUND**

In uplink carrier aggregation (CA) and dual connection (DC), a maximum transmission power of a terminal on a band combination (BC) is limited to a power class for terminal defined for the BC. In related technologies, a high power terminal (or high power UE, HPUE) is supported, to better use an independent power amplifier (PA) of the terminal to implement a higher transmission power.

At present, uplink simultaneous transmission towards multiple transmission and receiving points (TRPs) is implemented through multiple-panel. However, how to determine the maximum transmission power of each of multiple panels in simultaneous transmission via multi-panel (STxMP) is a problem to be solved.

**SUMMARY**

The present disclosure provides methods and apparatuses for determining capability information of a terminal, and a storage medium, to overcome the problem existing in the related technologies.

According to a first aspect of embodiments of the present disclosure, a method for determining capability information of a terminal is provided. The method is performed by the terminal and includes:

determining that the terminal supports uplink simultaneous transmission via multi-panel (STxMP);
determining that a sum of transmission powers of different antenna panels of the terminal in the STxMP is higher than a maximum transmission power determined based on a power class of the terminal;
determining capability information of the terminal, where the capability information indicates that a maximum transmission power of each of multiple antenna panels of the terminal in the STxMP supports transmission of a full power, and the full power is determined based on a power amplifier (PA) capability of each of the multiple antenna panels or a power class of each of the multiple antenna panels; and
sending the capability information to a network device.

In an implementation, the method further includes: determining that the maximum transmission power of each of the multiple antenna panels of the terminal in the STxMP does not support the transmission of the full power, and determining that the sum of the maximum transmission powers of each of the multiple antenna panels is less than or equal to the maximum transmission power determined based on the power class of the terminal.

In an implementation, the method further includes:
sending power information to the network device, where the power information indicates the maximum transmission power of each of the multiple antenna panels or the power class of each of the multiple antenna panels.

In an implementation, the power information does not include an identifier of a panel, and the multiple antenna panels of the terminal are symmetric panels and/or asymmetric panels.

In an implementation, the multiple antenna panels of the terminal are symmetric antenna panels, and the power information includes class information of at least one of the symmetric antenna panels; or
the multiple antenna panels of the terminal are asymmetric antenna panels, and the power information includes power information of all of the asymmetric antenna panels.

In an implementation, the power information includes identifiers of the multiple antenna panels, and the identifiers of the multiple antenna panels and maximum transmission powers or power classes of the multiple antenna panels have a correspondence relationship.

In an implementation, a sum of maximum transmission powers of the multiple antenna panels of the terminal in the STxMP is less than or equal to a first power threshold, and greater than or equal to a second power threshold; where the first power threshold is greater than the second power threshold.

In an implementation, the first power threshold is determined based on a maximum transmission power of the terminal allowed on a current carrier and a transmission power corresponding to the power class of each of the multiple antenna panels.

In an implementation, the first power threshold meets:

$$P_{CMAX\_H,f,c} = MIN\{P_{EMAX.c}, P_{PowerClass} - \Delta P_{PowerClass}\};$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, where the power reduction amount is determined based on a sum of transmission powers corresponding to power classes of the multiple antenna panels.

In an implementation, the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

In an implementation, the second power threshold meets:

$$P_{CMAX\_H,f,c} = MIN\left\{10\,log_{10}\sum MIN\left[\frac{P_{EMAX.c}}{\Delta t_{C,c}}, \frac{P_{PowerClass}}{MAX(mpr_c \cdot \Delta mpr_c, \; a-mpr_c)} \cdot \Delta t_{C,c} \cdot \Delta t_{IB,c} \cdot\right.\right.$$

$$\left.\left.\Delta t_{RxSRS,c}, \frac{P_{PowerClass}}{pmpr_c}\right], P_{EMAX,CA}, P_{PowerClass,STxMP}\right\};$$

where $P_{CMAX\_H,f,c}$ represents the second power threshold, $P_{EMAX.c}$ represents the maximum transmission power of the terminal allowed on a current carrier c in a higher layer configuration, $\Delta t_{C,c}$ represents a power reduction value determined based on an allocated bandwidth position on the current carrier c, $mpr_c$ represents a linear value of maximum power reduction (MPR) implemented by the terminal, $\Delta mpr_c$ represents a power reduction value determined based on a relative bandwidth size, $a$ - $mpr_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $pmpr_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP} = 10\,log_{10}\sum P_{PowerClass}$, and $P_{PowerClass}$ represents the transmission power corresponding to the power class of each of the multiple antenna panels.

In an implementation, the terminal performs the STxMP in single downlink control signalling (S-DCI), and a transmission channel / a signal corresponding to the STxMP includes at least one of:

a physical downlink shared channel (PUSCH);
a physical uplink control channel (PUCCH); or
a sounding reference signal (SRS).

In an implementation, the terminal performs the STxMP in multiple downlink control signalling (M-DCI), and a transmission channel / a signal corresponding to the STxMP includes at least one of:

a PUSCH and a PUSCH;
a PUCCH and a PUCCH;
a PUSCH and a PUCCH;
an SRS and an SRS;
an SRS and a PUCCH; or
an SRS and a PUSCH.

In an implementation, the capability information or the power information is carried in at least one of the following signalling:

RRC signalling;
an MAC-CE; or
UCI.

According to a second aspect of embodiments of the present disclosure, a method for determining capability information of a terminal is provided. The method is performed by a network device and includes:

receiving capability information sent by the terminal;
where the capability information indicates that the terminal performs uplink simultaneous transmission via multi-panel

(STxMP), and when a sum of transmission powers of different antenna panels of the terminal in the STxMP is higher than a maximum transmission power determined based on a power class of the terminal, a maximum transmission power of each of multiple antenna panels of the terminal in the STxMP supports transmission of a full power, and the full power is determined based on a power amplifier (PA) capability of each of the multiple antenna panels or a power class of each of the multiple antenna panels.

In an implementation, the method further includes: determining that the maximum transmission power of each of the multiple antenna panels of the terminal in the STxMP does not support the transmission of the full power, and determining that the sum of the maximum transmission powers of each of the multiple antenna panels is less than or equal to the maximum transmission power determined based on the power class of the terminal.

In an implementation, the method further includes:
receiving power information sent by the terminal, where the power information indicates the maximum transmission power of each of the multiple antenna panels or the power class of each of the multiple antenna panels.

In an implementation, the power information does not include an identifier of a panel, and the multiple antenna panels of the terminal are symmetric panels and/or asymmetric panels.

In an implementation, the multiple antenna panels of the terminal are symmetric antenna panels, and the power information includes class information of at least one of the symmetric antenna panels; or
the multiple antenna panels of the terminal are asymmetric antenna panels, and the power information includes power information of all of the asymmetric antenna panels.

In an implementation, the power information includes identifiers of the multiple antenna panels, and the identifiers of the multiple antenna panels and maximum transmission powers or power classes of the multiple antenna panels have a correspondence relationship.

In an implementation, a sum of maximum transmission powers of the multiple antenna panels of the terminal in the STxMP is less than or equal to a first power threshold, and greater than or equal to a second power threshold; where the first power threshold is greater than the second power threshold.

In an implementation, the first power threshold is determined based on a maximum transmission power of the terminal allowed on a current carrier and a transmission power corresponding to the power class of each of the multiple antenna panels.

In an implementation, the first power threshold meets:

$$P_{CMAX\_H,f,c} = MIN\{P_{EMAX.c}, P_{PowerClass} - \Delta P_{PowerClass}\};$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, where the power reduction amount is determined based on a sum of transmission powers corresponding to power classes of the multiple antenna panels.

In an implementation, the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

In an implementation, the second power threshold meets:

$$P_{CMAX\_H,f,c} = MIN\left\{10\log_{10}\sum MIN\left[\frac{P_{EMAX.c}}{\Delta t_{C,c}}, \frac{P_{PowerClass}}{MAX(mpr_c \cdot \Delta mpr_c, \, a - mpr_c)} \cdot \Delta t_{C,c} \cdot \Delta t_{IB,c} \cdot \right.\right.$$
$$\left.\left. \Delta t_{RxSRS,c}, \frac{P_{PowerClass}}{pmpr_c}\right], P_{EMAX,CA}, P_{PowerClass,STxMP}\right\};$$

where $P_{CMAX\_H,f,c}$ represents the second power threshold, $P_{EMAX.c}$ represents the maximum transmission power of the terminal allowed on a current carrier c in a higher layer configuration, $\Delta t_{C,c}$ represents a power reduction value determined based on an allocated bandwidth position on the current carrier c, $mpr_c$ represents a linear value of maximum power reduction (MPR) implemented by the terminal, $\Delta mpr_c$ represents a power reduction value determined based on a relative bandwidth size, $a - mpr_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $pmpr_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP} = 10\log_{10}\sum P_{PowerClass}$, and $P_{PowerClass}$ represents the transmission power corresponding to the power class of each of the multiple antenna panels.

In an implementation, the terminal performs the STxMP in single downlink control signalling (S-DCI), and a transmission channel / a signal corresponding to the STxMP includes at least one of:

a physical downlink shared channel (PUSCH);
a physical uplink control channel (PUCCH); or
a sounding reference signal (SRS).

In an implementation, the terminal performs the STxMP in multiple downlink control signalling (M-DCI), and a transmission channel / a signal corresponding to the STxMP includes at least one of:

a PUSCH and a PUSCH;
a PUCCH and a PUCCH;
a PUSCH and a PUCCH;
an SRS and an SRS;
an SRS and a PUCCH; or
an SRS and a PUSCH.

In an implementation, the capability information or power information sent by the terminal is received based on at least one of the following signalling:

RRC signalling;
an MAC-CE; or
UCI.

According to a third aspect of embodiments of the present disclosure, an apparatus for determining capability information of a terminal is provided. The apparatus includes:

a processing module, configured to determine that the terminal supports uplink simultaneous transmission via multi-panel (STxMP);
the processing module, further configured to determine that a sum of transmission powers of different antenna panels of the terminal in the STxMP is higher than a maximum transmission power determined based on a power class of the terminal;
the processing module, further configured to determine capability information of the terminal;
where the capability information indicates that a maximum transmission power of each of multiple antenna panels of the terminal in the STxMP supports transmission of a full power, and the full power is determined based on a power amplifier (PA) capability of each of the multiple antenna panels or a power class of each of the multiple antenna panels; and
a sending module, configured to send the capability information to a network device.

In an implementation, the processing module is further configured to determine that the maximum transmission power of each of the multiple antenna panels of the terminal in the STxMP does not support the transmission of the full power, and determine that the sum of the maximum transmission powers of each of the multiple antenna panels is less than or equal to the maximum transmission power determined based on the power class of the terminal.

In an implementation, the sending module is further configured to send power information to the network device, where the power information indicates the maximum transmission power of each of the multiple antenna panels or the power class of each of the multiple antenna panels.

In an implementation, the power information does not include an identifier of a panel, and the multiple antenna panels of the terminal are symmetric panels and/or asymmetric panels.

In an implementation, the multiple antenna panels of the terminal are symmetric antenna panels, and the power information includes class information of at least one of the symmetric antenna panels; or the multiple antenna panels of the terminal are asymmetric antenna panels, and the power information includes power information of all of the asymmetric antenna panels.

In an implementation, the power information includes identifiers of the multiple antenna panels, and the identifiers of the multiple antenna panels and maximum transmission powers or power classes of the multiple antenna panels have a correspondence relationship.

In an implementation, a sum of maximum transmission powers of the multiple antenna panels of the terminal in the STxMP is less than or equal to a first power threshold, and greater than or equal to a second power threshold;

where the first power threshold is greater than the second power threshold.

In an implementation, the first power threshold is determined based on a maximum transmission power of the terminal allowed on a current carrier and a transmission power corresponding to the power class of each of the multiple antenna panels.

In an implementation, the first power threshold meets:

$$P_{CMAX\_H,f,c} = MIN\{P_{EMAX.c}, P_{PowerClass} - \Delta P_{PowerClass}\};$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, where the power reduction amount is determined based on a sum of transmission powers corresponding to power classes of the multiple antenna panels.

In an implementation, the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

In an implementation, the second power threshold meets:

$$P_{CMAX\_H,f,c} = MIN\left\{10\,log_{10}\sum MIN\left[\frac{P_{EMAX.c}}{\Delta t_{C,c}}, \frac{P_{PowerClass}}{MAX(mpr_c \cdot \Delta mpr_c, \, a-mpr_c)} \cdot \Delta t_{C,c} \cdot \Delta t_{IB,c} \cdot \right.\right.$$

$$\left.\left. \Delta t_{RxSRS,c}, \frac{P_{PowerClass}}{pmpr_c}\right], P_{EMAX,CA}, P_{PowerClass,STxMP}\right\};$$

where $P_{CMAX\_H,f,c}$ represents the second power threshold, $P_{EMAX.c}$ represents the maximum transmission power of the terminal allowed on a current carrier c in a higher layer configuration, $\Delta t_{C,c}$ represents a power reduction value determined based on an allocated bandwidth position on the current carrier c, $mpr_c$ represents a linear value of maximum power reduction (MPR) implemented by the terminal, $\Delta mpr_c$ represents a power reduction value determined based on a relative bandwidth size, $a - mpr_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $pmpr_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP} = 10log_{10}\sum P_{PowerClass}$, and $P_{PowerClass}$ represents the transmission power corresponding to the power class of each of the multiple antenna panels.

In an implementation, the terminal performs the STxMP in single downlink control signalling (S-DCI), and a transmission channel / a signal corresponding to the STxMP includes at least one of:

a physical downlink shared channel (PUSCH);
a physical uplink control channel (PUCCH); or
a sounding reference signal (SRS).

In an implementation, the terminal performs the STxMP in multiple downlink control signalling (M-DCI), and a transmission channel / a signal corresponding to the STxMP includes at least one of:

a PUSCH and a PUSCH;
a PUCCH and a PUCCH;
a PUSCH and a PUCCH;
an SRS and an SRS;
an SRS and a PUCCH; or
an SRS and a PUSCH.

In an implementation, the capability information or the power information is carried in at least one of the following signalling:

RRC signalling;
an MAC-CE; or
UCI.

According to a fourth aspect of embodiments of the present disclosure, an apparatus for determining capability information of a terminal is provided. The apparatus includes:

> a receiving module, configured to receive capability information sent by the terminal;
> where the capability information indicates that the terminal performs uplink simultaneous transmission via multi-panel (STxMP), and when a sum of transmission powers of different antenna panels of the terminal in the STxMP is higher than a maximum transmission power determined based on a power class of the terminal, a maximum transmission power of each of multiple antenna panels of the terminal in the STxMP supports transmission of a full power, and the full power is determined based on a power amplifier (PA) capability of each of the multiple antenna panels or a power class of each of the multiple antenna panels.

In an implementation, the processing module is configured to determine that the maximum transmission power of each of the multiple antenna panels of the terminal in the STxMP does not support the transmission of the full power, and determine that the sum of the maximum transmission powers of each of the multiple antenna panels is less than or equal to the maximum transmission power determined based on the power class of the terminal.

In an implementation, the receiving module is further configured to receiving power information sent by the terminal, where the power information indicates the maximum transmission power of each of the multiple antenna panels or the power class of each of the multiple antenna panels.

In an implementation, the power information does not include an identifier of a panel, and the multiple antenna panels of the terminal are symmetric panels and/or asymmetric panels.

In an implementation, the multiple antenna panels of the terminal are symmetric antenna panels, and the power information includes class information of at least one of the symmetric antenna panels; or

the multiple antenna panels of the terminal are asymmetric antenna panels, and the power information includes power information of all of the asymmetric antenna panels.

In an implementation, the power information includes identifiers of the multiple antenna panels, and the identifiers of the multiple antenna panels and maximum transmission powers or power classes of the multiple antenna panels have a correspondence relationship.

In an implementation, a sum of maximum transmission powers of the multiple antenna panels of the terminal in the STxMP is less than or equal to a first power threshold, and greater than or equal to a second power threshold; where the first power threshold is greater than the second power threshold.

In an implementation, the first power threshold is determined based on a maximum transmission power of the terminal allowed on a current carrier and a transmission power corresponding to the power class of each of the multiple antenna panels.

In an implementation, the first power threshold meets:

$$P_{CMAX\_H,f,c} = MIN\{P_{EMAX.c}, P_{PowerClass} - \Delta P_{PowerClass}\};$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, where the power reduction amount is determined based on a sum of transmission powers corresponding to power classes of the multiple antenna panels.

In an implementation, the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

In an implementation, the second power threshold meets:

$$P_{CMAX\_H,f,c} = MIN\left\{10\,log_{10}\sum MIN\left[\frac{P_{EMAX.c}}{\Delta t_{C,c}}, \frac{P_{PowerClass}}{MAX(mpr_c\cdot\Delta mpr_c,\ a-mpr_c)}\cdot\Delta t_{C,c}\cdot\Delta t_{IB,c}\cdot\right.\right.$$
$$\left.\left.\Delta t_{RxSRS,c}, \frac{P_{PowerClass}}{pmpr_c}\right], P_{EMAX,CA}, P_{PowerClass,STxMP}\right\};$$

where $P_{CMAX\_H,f,c}$ represents the second power threshold, $P_{EMAX.c}$ represents the maximum transmission power of the terminal allowed on a current carrier c in a higher layer configuration, $\Delta t_{C,c}$ represents a power reduction value determined based on an allocated bandwidth position on the current carrier c, $mpr_c$ represents a linear value of maximum power reduction (MPR) implemented by the terminal, $\Delta mpr_c$ represents a power reduction value determined based on a relative bandwidth size, $a - mpr_c$ represents an additional power reduction value determined based on hardware implementation,

$\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $pmpr_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP} = 10 \log_{10} \Sigma\ P_{PowerClass}$, and $P_{PowerClass}$ represents the transmission power corresponding to the power class of each of the multiple antenna panels.

In an implementation, the terminal performs the STxMP in single downlink control signalling (S-DCI), and a transmission channel / a signal corresponding to the STxMP includes at least one of:

a physical downlink shared channel (PUSCH);
a physical uplink control channel (PUCCH); or
a sounding reference signal (SRS).

In an implementation, the terminal performs the STxMP in multiple downlink control signalling (M-DCI), and a transmission channel / a signal corresponding to the STxMP includes at least one of:

a PUSCH and a PUSCH;
a PUCCH and a PUCCH;
a PUSCH and a PUCCH;
an SRS and an SRS;
an SRS and a PUCCH; or
an SRS and a PUSCH.

In an implementation, the capability information or power information sent by the terminal is received based on at least one of the following signalling:

RRC signalling;
an MAC-CE; or
UCI.

According to a fifth aspect of embodiments of the present disclosure, a communication apparatus is provided. The communication apparatus includes: one or more processors;

a memory configured to store instructions executable by the one or more processors;
where the one or more processors are configured to perform the method in the first aspect or any one of the implementations in the first aspect.

According to a sixth aspect of embodiments of the present disclosure, a communication is provided. The communication apparatus includes: one or more processors;

a memory configured to store instructions executable by the one or more processors;
where the one or more processors are configured to perform the method in the second aspect or any one of the implementations in the second aspect.

According to a seventh aspect of embodiments of the present disclosure, a storage medium is provided. The instructions in the storage medium, when executed by one or more processors of a terminal, enable the terminal to perform the method in the first aspect or any one of the implementations in the first aspect.

According to an eighth aspect of embodiments of the present disclosure, a storage medium is provided. The instructions in the storage medium, when executed by one or more processors of a network device, enable the network device to perform the method in the second aspect or any one of the implementations in the second aspect.

According to a ninth aspect of the embodiments of the present disclosure, a communication system is provided. The communication system includes a terminal and a network device, where the terminal is configured to perform the method in the first aspect or any one of the implementations in the first aspect; and the network device is configured to perform the method in the second aspect or any one of the implementations in the second aspect.

The technical solutions provided by the embodiments of the present disclosure may include the following beneficial effects: when the terminal supports the STxMP, and the sum of transmission powers of different antenna panels of the terminal in the STxMP is higher than a maximum transmission power determined based on a power class of the terminal, capability information of the terminal is determined, where the capability information indicates that a maximum transmission power of each of multiple antenna panels of the terminal in the STxMP supports transmission of a full power, and the full power is determined based on a PA capability of each of the multiple antenna panels or a power class of each of the multiple antenna panels. Therefore, through the capability information, the sum of the transmission powers of the multiple antenna panels of the terminal in the STxMP is no longer limited to the maximum transmission power defined by the power class of the terminal, but the maximum transmission power of each antenna panel may reach the transmission of the full power, thereby improving the transmission quality of the uplink transmission and the system transmission throughput.

It should be understood that the above general description and the detailed description in the following text are only exemplary and explanatory, and cannot limit the present disclosure.

## BRIEF DESCRIPTION OF DRAWINGS

The accompanying drawings here are incorporated into the specification and form a part of this specification, show embodiments conforming to the present disclosure and are used together with the specification to explain principles of the present disclosure.

FIG. 1 is a schematic diagram of a wireless communication system shown according to an exemplary embodiment.
FIG. 2 is a schematic diagram of an MP-MTRP transmission scenario in S-DCI scheduling shown according to an exemplary embodiment.
FIG. 3 is a schematic diagram of an MP-MTRP transmission scenario in M-DCI scheduling shown according to an exemplary embodiment.
FIG. 4 is a flowchart of a method for determining capability information of a terminal shown according to an exemplary embodiment.
FIG. 5 is a flowchart of a method for determining capability information of a terminal shown according to an exemplary embodiment.
FIG. 6 is a flowchart of a method for determining capability information of a terminal shown according to an exemplary embodiment.
FIG. 7 is a flowchart of a method for determining capability information of a terminal shown according to an exemplary embodiment.
FIG. 8 is a block diagram of an apparatus for determining capability information of a terminal shown according to an exemplary embodiment.
FIG. 9 is a block diagram of an apparatus for determining capability information of a terminal shown according to an exemplary embodiment.
FIG. 10 is a block diagram of an apparatus for determining capability information of a terminal shown according to an exemplary embodiment.
FIG. 11 is a block diagram of an apparatus for determining capability information of a terminal shown according to an exemplary embodiment.

## DETAILED DESCRIPTION

Exemplary embodiments will be described in details herein, with examples thereof represented in the accompanying drawings. When the following description involves the accompanying drawings, same numerals in different figures represent same or similar elements unless otherwise indicated. Implementations described in the following exemplary embodiments do not represent all implementations consistent with the present disclosure.

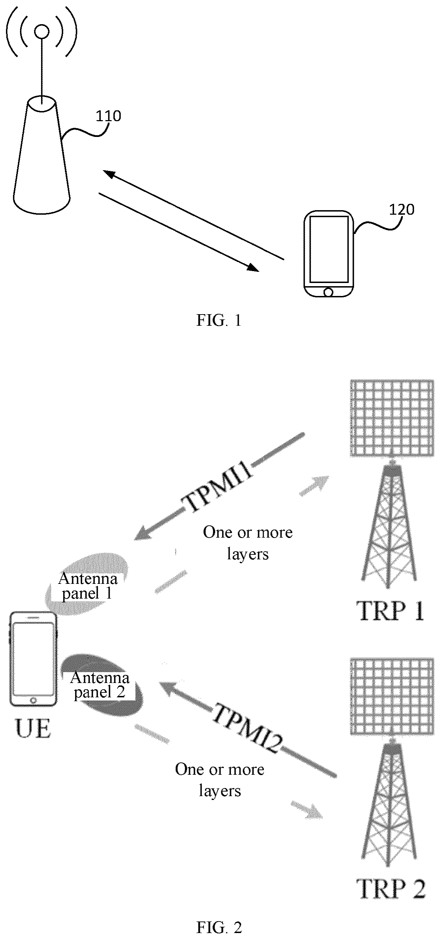

The method for determining capability information of a terminal involved in the present disclosure may be applied to the wireless communication system shown in FIG. 1. The network system may include a network device 110 and a terminal 120. It should be understood that the wireless communication system shown in FIG. 1 is only for schematic explanation. The wireless communication system may also include other network devices, such as core network devices, wireless relay devices, wireless backhaul devices, etc., which are not shown in FIG. 1. The embodiments of the present disclosure do not limit the number of network devices and terminals included in the wireless communication system.

It can be further understood that the wireless communication system in the embodiments of the present disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. According to factors of different networks, such as a capacity, a speed, and a latency, the networks may be categorized into a 2G (generation) network, a 3G network, a 4G network, or a future evolution network, such as a 5th generation wireless communication system (5G) network that is also referred to as a new radio (NR). For the convenience of description, the wireless communication network is sometimes referred to as a network in the present disclosure.

Moreover, the network device 110 involved in the present disclosure may also be referred to as a wireless access network device. The wireless access network devices may be: base stations, evolved node Bs, home base stations, access points (AP) in a wireless fidelity (WIFI) system, wireless relay nodes, wireless backhaul nodes, transmission points (TP), or transmission and receiving points (or transmission reception point, TRP), etc. The wireless access network devices also may be: gNBs in the NR system, or components or part of the devices constituting the base stations, etc. When the network is a vehicle-to-everything (V2X) communication system, the network devices may also be vehicle-mounted devices. It should be understood that specific technologies and specific device forms used by the network device are not limited in the embodiments of the present disclosure.

Moreover, the terminal 120 involved in the present disclosure is also referred to as a terminal device, user equipment (UE), a mobile station (MS), a mobile terminal (MT), etc., and is a device that provides voice and/or data connectivity to a user. For example, the terminal may be a handheld device, a vehicle-mounted device, etc., that has a wireless connection function. At present, examples of some terminals are smartphones (mobile phone), pocket personal computers (PPC), handheld computers, personal digital assistants (PDA), laptops, tablets, wearable devices, or vehicle-mounted devices, etc. Additionally, when the network is the vehicle-to-everything (V2X) communication system, the terminal devices may also be the vehicle-mounted devices. It should be understood that specific technologies and specific device forms adopted by the terminals are not limited in the embodiments of the present disclosure.

In the embodiments of the present disclosure, the network device 110 and the terminal 120 may use any feasible wireless communication technology to implement mutual data transmission. A transmission channel corresponding to sending, by the network device 110, data or control information to the terminal 120 is referred to as a downlink (DL) channel, and a transmission channel corresponding to sending, by the terminal 120, the data or control information to the network device 110 is referred to as an uplink (UL) channel. It may be understood that the network device involved in the embodiments of the present disclosure may be a base station. Certainly, the network device may alternatively be any other possible network device, and the terminal may be any possible terminal, which will be not limited in the present disclosure.

With development of communication technologies, to ensure a coverage range, uplink physical downlink shared channel (PUSCH) transmission is directed toward multiple TRPs of a network device. Coordinated transmission in a time-division multiplexing (TDM) transmission mode is introduced in the Release (R) 17, and different repetitions of the same information on a PUSCH are sent to different TRPs of a base station in a time-division manner through different transmission occasions (TO) in the time domain. This method has relatively low requirements for the capability of the terminal and does not require the capability to support simultaneously sending beams, but has a large transmission delay.

For the uplink, for the PUSCHs towards different TRPs, spatial characteristics of actually passed channels may be greatly different, and therefore it is considered that quasi co-location QCL-D of PUSCHs in different transmission directions are different.

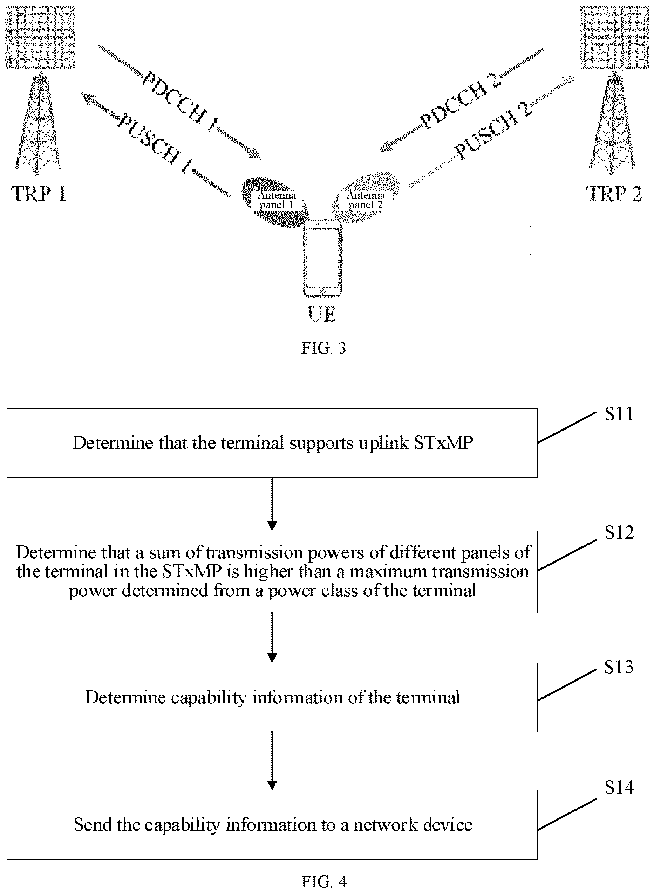

In the R18, it is mainly desired to implement simultaneous coordinated transmission towards multiple TRPs through multiple antenna panels, to increase transmission reliability and throughput, and reduce the transmission delay for multiple TRPs, but require a terminal to have a capability of simultaneously sending multiple beams. The transmission of the PUSCH may be based on a single physical downlink control channel (PDCCH), that is, multiple-panel/TRP transmission scheduled by single-downlink control information (S-DCI), as shown in FIG. 2. The transmission of the PUSCH may also be based on different PDCCHs, that is, multiple-panel/TRP transmission scheduled by multiple-DCI (M-DCI), as shown in FIG. 3.

In an actual deployment, a link between transmission points may be a relatively ideal backhaul link supporting a high throughput and a very low backhaul delay, or may be a non-ideal backhaul link using various digital subscribe lines (DSL), microwaves, relays, and other manners. An M-DCI-based non-coherent joint transmission (NC-JT) transmission solution is initially mainly introduced for a non-ideal backhaul situation, but this solution may also be used for an ideal backhaul situation.

Currently, a capability level definition of the terminal in a frequency range (FR) 2 is defined according to different terminal types, including a TRP definition based on a conducted power and a spatial power definition based on equivalent isotropically radiated power (EIRP), as shown in Table 1.

Table 1

| Power class of terminal | Terminal type |
|---|---|
| 1 | Fixed wireless access (FWA) terminal |
| 2 | Vehicular terminal |
| 3 | Handheld terminal |
| 4 | High power non-handheld terminal |

(continued)

| Power class of terminal | Terminal type |
|---|---|
| 5 | Fixed wireless access (FWA) terminal |
| 6 | High speed train roof-mounted terminal |
| 7 | Reduced-capability (RedCap) terminal |
| Note: RedCap variants of non-RedCap terminals are not precluded | |

In a new radio (NR) technology, a terminal with dual-PA supports carrier aggregation (CA) and dual connection (DC), and the maximum transmission power of the terminal is affected by a power class (PC) defined by the terminal. For example, when the power class defined by the terminal is PC2, PA capabilities of the terminal on different bands may be different. For example, the terminal power configuration is shown in Table 2.

Table 2

| | Power class of terminal | Power class of network carrier X | Power class of network carrier Y |
|---|---|---|---|
| Combination a | 26 dBm | 23 dBm | 23 dBm |
| Combination b | 26 dBm | 23 dBm | 26 dBm |
| Combination c | 26 dBm | 26 dBm | 23 dBm |
| Combination d | 26 dBm | 26 dBm | 26 dBm |

The carrier X and the carrier Y represent different bands. It can be seen from the Table 1 that if the power class of the terminal on a band is limited to 23 decibel milliwatts (dBm), and the power class of the terminal on another band is also limited to 23 dBm, the power class of the terminal is limited to a maximum of 26 dBm. However, for example, in the case of the combination b and combination c, when the power class of the terminal on a band is limited to 23 dBm, and the power class of the terminal on another band is limited to 26 dBm, the power class of the terminal can only reach a maximum of 26 dBm due to related protocol regulations, but actually the maximum transmission power of the terminal may reach 27.8 dBm under the implementation of the terminal with the independent PA. In the case of the combination d, the power class of the terminal can also only reach a maximum of 26 dBm due to the related protocol regulations, but actually the maximum transmission power of the terminal may reach 29 dBm under the implementation of the terminal with the independent PA. That is, the maximum transmission power of the terminal is limited to the power class of terminal specified in the protocol. For the R17 increasing the terminal power upper limit for CA/DC, for a band combination where one band supports up to a power class 3 (PC3, 23 dBm) and another band supports up to a power class 2 (PC2, 26 dBm), it can be assumed that the total power associated with the band combination is a sum of respective power classes. A high power terminal (or high power UE, HPUE) is supported in R17, to better use an independent power amplifier (PA) of the terminal to implement a higher transmission power.

In R18 uplink multiple-input multiple-output (MIMO) system enhancement, it is considered that the uplink simultaneous transmission towards multiple TRPs is implemented through the multiple-panel, to further improve uplink system transmission throughput and transmission reliability. For a terminal supporting the STxMP, different panels have independent PA structures, and a sum of transmission powers of multiple panels is still limited to a maximum transmission power defined by a power class of the terminal at present, so how to determine the maximum transmission power of each of multiple panels in the STxMP to implement better transmission quality and coverage is a problem to be solved.

Based on this, in the method for determining capability information of a terminal provided by the present disclosure, it is determined, through the capability information of the terminal, that the sum of the transmission powers of the multiple antenna panels of the terminal in the STxMP is no longer limited to the maximum transmission power defined by the power class of the terminal, but the maximum transmission power of each antenna panel may reach the transmission of the full power, thereby improving the transmission quality of the uplink transmission and the system transmission throughput.

FIG. 4 is a flowchart of a method for determining capability information of a terminal shown according to an exemplary embodiment. As shown in FIG. 4, the method for determining capability information of a terminal is executed by the terminal and includes the following steps S11-S 14.

At step S11, it is determined that the terminal supports uplink STxMP.

At step S12, it is determined that a sum of transmission powers of different panels of the terminal in the STxMP is higher than a maximum transmission power determined based on a power class of the terminal.

At step S13, capability information of the terminal is determined.

At step S14, the capability information is sent to a network device.

In the embodiments of the present disclosure, the capability information indicates that a maximum transmission power of each of multiple panels of the terminal in the STxMP supports transmission of a full power, and the full power is determined based on a PA capability of each of the multiple panels or a power class of each of the multiple panels.

In some embodiments, the capability information may be maximum transmission power capability information (HignPowerLimitSTxMP).

In some embodiments, the PA capability of the panel is used for determining an actual maximum transmission power of the panel, and the power class of the panel is used for determining a maximum transmission power of the panel defined based on the power class.

For example, the terminal performs the STxMP through two panels, a maximum transmission power of a panel 1 defined based on the power class is 26 dBm, and a maximum transmission power of a panel 2 defined based on the power class is 23 dBm, and full powers of the panel 1 and of the panel 2 are 27.8 dBm.

For another example, the terminal performs the STxMP through two panels, the actual transmission power of the panel 1 determined based on the PA capability is 23 dBm, and the actual transmission power of the panel 2 determined based on the PA capability is 23 dBm, and the full powers of the panel 1 and of the panel 2 are 26 dBm.

In some embodiments, when the terminal supports the uplink STxMP, the transmission power of the panel 1 determined based on the PA capability or power class of the panel 1 may reach 23 dBm, and the transmission power of the panel 2 determined based on the PA capability or power class of the panel 2 may reach 26 dBm; and therefore, the sum of the transmission powers of the panel 1 and the panel 2 may actually reach 27.8 dBm. However, because the maximum transmission power defined by the power class of the terminal is 26 dBm, the sum of the maximum transmission powers of the panel 1 and the panel can only reach a maximum of 26 dBm, and cannot reach the transmission of the full power of 27.8 dBm. In this case, it is determined, through the capability information of the terminal, that the maximum transmission power of each of the multiple panels of the terminal in the STxMP supports the transmission of the full power, and then the maximum transmission powers of the panel 1 and panel 2 may reach the transmission of the full power of 27.8 dBm.

In the embodiment of the present disclosure, when the terminal supports the STxMP, and the sum of the transmission powers of different panels of the terminal in the STxMP is higher than the maximum transmission power determined based on the power class of the terminal, it is determined, through the capability information of the terminal, that the maximum transmission power of each of the multiple panels of the terminal in the STxMP supports the transmission of the full power, so that the sum of the transmission powers of the multiple panels of the terminal in the STxMP is no longer limited to the maximum transmission power defined by the power class of the terminal, but the maximum transmission power of each panel may reach the transmission of the full power, thereby improving the transmission quality of the uplink transmission and the system transmission throughput.

In the method for determining capability information of a terminal provided by the embodiment of the present disclosure, when the terminal does not have the capability information, that is, the maximum transmission power of each of the multiple panels of the terminal in the STxMP does not support the transmission of the full power, it is determined that the sum of the maximum transmission powers of each of the multiple panels is less than or equal to the maximum transmission power determined based on the power class of the terminal.

For example, when the terminal supports the uplink STxMP, the transmission power of the panel 1 determined based on the PA capability or power class of the panel 1 may reach 23 dBm, and the transmission power of the panel 2 determined based on the PA capability or power class of the panel 2 may reach 26 dBm; and therefore, the sum of the transmission powers of the panel 1 and the panel 2 may actually reach 27.8 dBm. However, because the maximum transmission power defined by the power class of the terminal is 26 dBm, the sum of the maximum transmission powers of the panel 1 and the panel can only reach a maximum of 26 dBm, and cannot reach the transmission of the full power of 27.8 dBm. In this case, if it is determined, through the capability information of the terminal, that the maximum transmission power of each of the multiple panels of the terminal in the STxMP supports the transmission of the full power, the maximum transmission powers of the panel 1 and panel 2 may reach the transmission of the full power of 27.8 dBm. If the terminal does not have the capability information, the sum of the maximum transmission powers of the panel 1 and the panel 2 can only reach a maximum of 26 dBm.

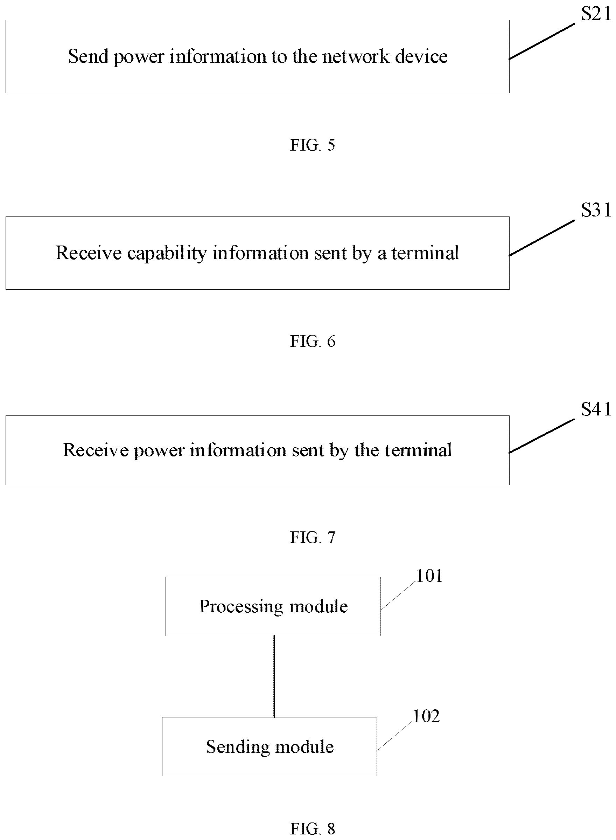

In the method for determining capability information of a terminal provided by the embodiment of the present disclosure, regardless of whether the terminal has the capability information and whether the terminal reports the capability information to the network device, because the network device does not know power information of each panel, the terminal needs to send the power information of each panel to the network device. As shown in FIG. 5, the method includes the following step S21.

At step S21, power information is sent to the network device.

The power information is used to indicate the maximum transmission power of each of the multiple panels or the power class of each of the multiple panels.

In an implementation, when the power information is used to indicate the power class of the panel, the maximum transmission power is determined based on the power class of the panel. For example, the power class of the panel is PC2, and then the maximum transmission power of the panel is 26 dBm.

In the method for determining capability information of a terminal provided by the embodiment of the present disclosure, the power information does not include an identifier of a panel, and the multiple panels of the terminal are symmetric panels and/or asymmetric panels.

All the symmetric panels have same maximum transmission powers or power classes. The asymmetric panels have different maximum transmission powers or power classes.

In some embodiments of the method for determining capability information of a terminal provided by the embodiment of the present disclosure, the multiple panels of the terminal are symmetric panels, and the power information includes class information of at least one of the symmetric panels.

In an implementation, because the multiple panels of the terminal are symmetric panels, the multiple panels of the terminal have same maximum transmission powers and power classes. At this time, the terminal only needs to report the maximum transmission power or power class of one symmetric panel, and the network device may determine the maximum transmission power of each panel.

In some other embodiments of the method for determining capability information of a terminal provided by the embodiment of the present disclosure, the multiple panels of the terminal are asymmetric panels, and the power information includes power information of all asymmetric panels of the asymmetric antenna panels.

In an implementation, because the multiple panels of the terminal are asymmetric panels, the multiple panels of the terminal have different maximum transmission powers and power classes. At this time, the terminal needs to report the power information of all asymmetric panels. For example, the terminal reports power information of all asymmetric panels based on a beam, or reports power information of all asymmetric panels based on CSI of the beam.

In the method for determining capability information of a terminal provided by the embodiment of the present disclosure, the power information includes identifiers of multiple panels, and the identifiers of the multiple panels and the maximum transmission powers or power classes of the multiple panels have a correspondence relationship.

In the embodiments of the present disclosure, the power information includes identifiers of multiple panels, each panel has a corresponding identifier and a corresponding maximum transmission power or power class, and the network device can determine the maximum transmission power or power class of each panel based on the identifier of each panel, to learn of the maximum transmission power of each panel.

In the method for determining capability information of a terminal provided by the embodiment of the present disclosure, when the terminal has the capability information, the sum of the maximum transmission powers of the multiple panels of the terminal in the STxMP is higher than the maximum transmission power corresponding to the power class of the terminal.

For example, the terminal performs the STxMP through two panels, where the maximum transmission power of the panel 1 is 26 dBm, the maximum transmission power of the panel 2 is 23 dBm, the sum of the maximum transmission powers of the panel 1 and the panel 2 is 27.8 dBm, and the maximum transmission power corresponding to the power class of the terminal is 26 dBm.

In the embodiment of the present disclosure, when the terminal has the capability information, the maximum transmission power of each of the multiple panels of the terminal in the STxMP supports the transmission of the full power, that is, the maximum transmission powers of the multiple panels are no longer limited to the maximum transmission power corresponding to the power class of the terminal, and the sum of the maximum transmission powers of the multiple panels can be higher than the maximum transmission power corresponding to the power class of the terminal, thereby improving the transmission quality of the uplink transmission and the system transmission throughput.

In the method for determining capability information of a terminal provided by the embodiment of the present disclosure, the sum of the maximum transmission powers of the multiple panels of the terminal in the STxMP is less than or equal to a first power threshold, and greater than or equal to a second power threshold. The first power threshold is greater than the second power threshold.

In the method for determining capability information of a terminal provided by the embodiment of the present disclosure, the first power threshold is determined based on a maximum transmission power of the terminal allowed on a current carrier and a transmission power corresponding to the power class of each of the multiple panels.

In some embodiments of the method for determining capability information of a terminal provided by the embodiment of the present disclosure, the first power threshold meets:

$$P_{CMAX\_H,f,c} = MIN\{P_{EMAX.c}, P_{PowerClass} - \Delta P_{PowerClass}\};$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount.

In the method for determining capability information of a terminal provided by the embodiment of the present disclosure, when the terminal has capability information and the terminal reports the capability information to the network device, the power reduction amount is determined based on a sum of transmission powers corresponding to power classes of the multiple panels.

In an implementation, the power reduction amount is determined based on $10 \, log_{10} \, \Sigma \, P_{PowerClass}$.

In the method for determining capability information of a terminal provided by the embodiment of the present disclosure, the second power threshold is determined based on the transmission power corresponding to the power class of each panel and the maximum transmission power of the terminal in the STxMP.

The maximum transmission power of the terminal in the STxMP is determined based on a sum of transmission powers corresponding to power classes of multiple panels.

In some embodiments of the method for determining capability information of a terminal provided by the embodiment of the present disclosure, the second power threshold meets:

$$P_{CMAX\_H,f,c} = MIN \left\{ 10 \, log_{10} \sum MIN \left[ \frac{P_{EMAX.c}}{\Delta t_{C,c}}, \frac{P_{PowerClass}}{MAX(\text{mpr}_c \cdot \Delta \text{mpr}_c \, , \, a - \text{mpr}_c)} \cdot \Delta t_{C,c} \cdot \Delta t_{IB,c} \cdot \right. \right.$$
$$\left. \left. \Delta t_{RxSRS,c}, \frac{P_{PowerClass}}{\text{pmpr}_c} \right], P_{EMAX,CA}, P_{PowerClass,STxMP} \right\};$$

where $P_{CMAX\_H,f,c}$ represents the second power threshold, $P_{EMAX.c}$ represents the maximum transmission power of the terminal allowed on the current carrier c in a higher layer configuration, $\Delta t_{C,c}$ represents a power reduction value determined based on an allocated bandwidth position on the current carrier c, $\text{mpr}_c$ represents a linear value of maximum power reduction (MPR) implemented by the terminal, $\Delta \text{mpr}_c$ represents a power reduction value determined based on a relative bandwidth size, $a - \text{mpr}_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $\text{pmpr}_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP} = 10 log_{10} \Sigma \, P_{PowerClass}$, and $P_{PowerClass}$ represents the transmission power corresponding to the power class of each of the multiple antenna panels.

In the embodiment of the present disclosure, the maximum transmission power of each panel is enhanced, so that the maximum transmission power of each panel can support higher transmission of the full power, and the sum of the maximum transmission powers of the multiple panels needs to be enhanced correspondingly. In this embodiment of the present disclosure, the first power threshold and the second power threshold are re-specified, and the sum of the maximum transmission powers of the multiple panels is enhanced, so that the sum of the maximum transmission powers of the multiple panels can be higher than the maximum transmission power corresponding to the power class of the terminal, thereby improving the transmission quality of the uplink transmission and the system transmission throughput.

In the method for determining capability information of a terminal provided by the embodiment of the present disclosure, the terminal performs the STxMP in the S-DCI, and the transmission channel/signal corresponding to the STxMP includes at least one of:

a PUSCH;
a PUCCH; or
a sounding reference signal (SRS).

In the method for determining capability information of a terminal provided by the embodiment of the present disclosure, the terminal performs the STxMP in the M-DCI, and the transmission channel/signal corresponding to the STxMP includes at least one of:

a PUSCH and a PUSCH;
a PUCCH and a PUCCH;
a PUSCH and a PUCCH;
an SRS and an SRS;
an SRS and a PUCCH; or
an SRS and a PUSCH.

In the embodiment of the present disclosure, when the transmission channel/signal corresponding to the STxMP is any one of the above, and it is determined that the terminal has the capability information, a maximum transmission capability of each panel adopts the transmission of the full power.

In the method for determining capability information of a terminal provided by the embodiment of the present disclosure, the capability information and/or the power information are/is carried in at least one of the following signalling:

radio resource control (RRC) signalling;
media access control (MAC) control element (MAC-CE); or
uplink control information (UCI).

The capability information and the power information may be carried in same signalling, or may be carried in different signalling.

Based on the same concept, an embodiment of the present disclosure further provides a method for determining capability information of a terminal, performed by a network device.

FIG. 6 is a flowchart of a method for determining capability information of a terminal shown according to an exemplary embodiment. As shown in FIG. 6, the method for determining capability information of a terminal is performed by the network device and includes the following step S31.

At step S31, capability information sent by the terminal is received.

The capability information indicates that the terminal performs STxMP, and when a sum of transmission powers of different panels of the terminal in the STxMP is higher than a maximum transmission power determined based on a power class of the terminal, a maximum transmission power of each of multiple panels of the terminal in the STxMP supports transmission of a full power, and the full power is determined based on a PA capability of each of the multiple panels or a power class of each of the multiple panels.

In some embodiments, the capability information may be maximum transmission power capability information (HignPowerLimitSTxMP).

In some embodiments, the PA capability of the panel is used for determining an actual maximum transmission power of the panel, and the power class of the panel is used for determining a maximum transmission power of the panel defined based on the power class.

For example, the terminal performs the STxMP through two panels, a maximum transmission power of a panel 1 defined based on the power class is 26 dBm, and a maximum transmission power of a panel 2 defined based on the power class is 23 dBm, and full powers of the panel 1 and of the panel 2 are 27.8 dBm.

For another example, the terminal performs the STxMP through two panels, the actual transmission power of the panel 1 determined based on the PA capability is 23 dBm, and the actual transmission power of the panel 2 determined based on the PA capability is 23 dBm, and the full powers of the panel 1 and of the panel 2 are 26 dBm.

In some embodiments, when the terminal supports the uplink STxMP, the transmission power of the panel 1 determined based on the PA capability or power class of the panel 1 may reach 23 dBm, and the transmission power of the panel 2 determined based on the PA capability or power class of the panel 2 may reach 26 dBm; and therefore, the sum of the transmission powers of the panel 1 and the panel 2 may actually reach 27.8 dBm. However, because the maximum transmission power defined by the power class of the terminal is 26 dBm, the sum of the maximum transmission powers of the panel 1 and the panel can only reach a maximum of 26 dBm, and cannot reach the transmission of the full power of 27.8 dBm. In this case, it is determined, through the capability information of the terminal, that the maximum transmission power of each of the multiple panels of the terminal in the STxMP supports the transmission of the full power, and then the maximum transmission powers of the panel 1 and panel 2 may reach the transmission of the full power of 27.8 dBm.

In the embodiment of the present disclosure, by receiving the capability information sent by the terminal, the network device can determine that when the terminal supports the STxMP, and the sum of the transmission powers of different panels of the terminal in the STxMP is higher than the maximum transmission power determined based on the power class of the terminal, the maximum transmission power of each of the multiple panels of the terminal in the STxMP supports the transmission of the full power, so that the sum of the transmission powers of the multiple panels of the terminal in the STxMP is no longer limited to the maximum transmission power defined by the power class of the terminal, but the maximum transmission power of each panel may reach the transmission of the full power, thereby improving the transmission quality of the uplink transmission and the system transmission throughput.

In the method for determining capability information of a terminal provided by the embodiment of the present disclosure, when the network device does not receive the capability information sent by the terminal, the maximum transmission power of each of the multiple antenna panels of the terminal in the STxMP does not support the transmission of the full power, and then it is determined that the sum of the maximum transmission powers of each of the multiple antenna panels is less than or equal to the maximum transmission power determined based on the power class of the terminal.

For example, when the terminal supports the uplink STxMP, the transmission power of the panel 1 determined based on the PA capability or power class of the panel 1 may reach 23 dBm, and the transmission power of the panel 2 determined based on the PA capability or power class of the panel 2 may reach 26 dBm; and therefore, the sum of the transmission powers of the panel 1 and the panel 2 may actually reach 27.8 dBm. However, because the maximum transmission power defined by the power class of the terminal is 26 dBm, the sum of the maximum transmission powers of the panel 1 and the panel can only reach a maximum of 26 dBm, and cannot reach the transmission of the full power of 27.8 dBm. If it is determined, by receiving the capability information sent by the terminal, that the maximum transmission power of each of the multiple panels of the terminal in the STxMP supports the transmission of the full power, and then the maximum transmission powers of the panel 1 and panel 2 may reach the transmission of the full power of 27.8 dBm. If the capability information sent by the terminal is not received, the sum of the maximum transmission powers of the panel 1 and the panel 2 can only reach a maximum of 26 dBm.

In the method for determining capability information of a terminal provided by the embodiment of the present disclosure, regardless of whether the capability information sent by the terminal is received, the network device needs to receive power information of each panel reported by the terminal. As shown in FIG. 7, the method includes the following step S41.

At step S41, power information sent by the terminal is received.

The power information is used to indicate the maximum transmission power of each of the multiple panels or the power class of each of the multiple panels.

In an implementation, when the power information is used to indicate the power class of the panel, the maximum transmission power is determined based on the power class of the panel. For example, the power class of the panel is PC2, and then the maximum transmission power of the panel is 26 dBm.

In the method for determining capability information of a terminal provided by the embodiment of the present disclosure, the power information does not include an identifier of a panel, and the multiple panels of the terminal are symmetric panels and/or asymmetric panels.

All the symmetric panels have same maximum transmission powers or power classes. The asymmetric panels have different maximum transmission powers or power classes.

In some embodiments of the method for determining capability information of a terminal provided by the embodiment of the present disclosure, the multiple panels of the terminal are symmetric panels, and the power information includes class information of at least one of the symmetric panels.

In an implementation, because the multiple panels of the terminal are symmetric panels, the multiple panels of the terminal have same maximum transmission powers and power classes. At this time, the terminal only needs to report the maximum transmission power or power class of one symmetric panel, and the network device may determine the maximum transmission power of each panel.

In some other embodiments of the method for determining capability information of a terminal provided by the embodiment of the present disclosure, the multiple panels of the terminal are asymmetric panels, and the power information includes power information of all asymmetric panels of the asymmetric antenna panels.

In an implementation, because the multiple panels of the terminal are asymmetric panels, the multiple panels of the terminal have different maximum transmission powers and power classes. At this time, the terminal needs to report the power information of all asymmetric panels. For example, the terminal reports power information of all asymmetric panels based on a beam, or reports power information of all asymmetric panels based on CSI of the beam.

In the method for determining capability information of a terminal provided by the embodiment of the present disclosure, the power information includes identifiers of multiple panels, and the identifiers of the multiple panels and the maximum transmission powers or power classes of the multiple panels have a correspondence relationship.

In the embodiments of the present disclosure, the power information includes identifiers of multiple panels, each panel has a corresponding identifier and a corresponding maximum transmission power or power class, and the network device can determine the maximum transmission power or power class of each panel based on the identifier of each panel, to learn of the maximum transmission power of each panel.

In the method for determining capability information of a terminal provided by the embodiment of the present disclosure, when the terminal has the capability information, the sum of the maximum transmission powers of the multiple panels of the terminal in the STxMP is higher than the maximum transmission power corresponding to the power class of the terminal.

For example, the terminal performs the STxMP through two panels, where the maximum transmission power of the panel 1 is 26 dBm, the maximum transmission power of the panel 2 is 23 dBm, the sum of the maximum transmission powers of the panel 1 and the panel 2 is 27.8 dBm, and the maximum transmission power corresponding to the power class of the terminal is 26 dBm.

In the embodiment of the present disclosure, when the terminal has the capability information, the maximum transmission power of each of the multiple panels of the terminal in the STxMP supports the transmission of the full power, that is, the maximum transmission powers of the multiple panels are no longer limited to the maximum transmission power corresponding to the power class of the terminal, and the sum of the maximum transmission powers of the multiple panels can be higher than the maximum transmission power corresponding to the power class of the terminal, thereby improving the transmission quality of the uplink transmission and the system transmission throughput.

In the method for determining capability information of a terminal provided by the embodiment of the present disclosure, the sum of the maximum transmission powers of the multiple panels of the terminal in the STxMP is less than or equal to a first power threshold, and greater than or equal to a second power threshold. The first power threshold is greater than the second power threshold.

In the method for determining capability information of a terminal provided by the embodiment of the present disclosure, the first power threshold is determined based on a maximum transmission power of the terminal allowed on a current carrier and a transmission power corresponding to the power class of each of the multiple panels.

In some embodiments of the method for determining capability information of a terminal provided by the embodiment of the present disclosure, the first power threshold meets:

$$P_{CMAX\_H,f,c} = MIN\{P_{EMAX.c}, P_{PowerClass} - \Delta P_{PowerClass}\};$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount.

In the method for determining capability information of a terminal provided by the embodiment of the present disclosure, when the terminal has capability information and the terminal reports the capability information to the network device, the power reduction amount is determined based on a sum of transmission powers corresponding to power classes of the multiple panels.

In an implementation, the power reduction amount is determined based on $10 \, log_{10} \, \Sigma \, P_{PowerClass}$.

In the method for determining capability information of a terminal provided by the embodiment of the present disclosure, the second power threshold is determined based on the transmission power corresponding to the power class of each panel and the maximum transmission power of the terminal in the STxMP.

The maximum transmission power of the terminal in the STxMP is determined based on a sum of transmission powers corresponding to power classes of multiple panels.

In some embodiments of the method for determining capability information of a terminal provided by the embodiment of the present disclosure, the second power threshold meets:

$$P_{CMAX\_H,f,c} = MIN \left\{ 10 \, log_{10} \, \Sigma \, MIN \left[ \frac{P_{EMAX.c}}{\Delta t_{C,c}}, \frac{P_{PowerClass}}{MAX(mpr_c \cdot \Delta mpr_c, \, a-mpr_c)} \cdot \Delta t_{C,c} \cdot \Delta t_{IB,c} \cdot \right. \right.$$

$$\left. \left. \Delta t_{RxSRS,c}, \frac{P_{PowerClass}}{pmpr_c} \right], P_{EMAX,CA}, P_{PowerClass,STxMP} \right\};$$

where $P_{CMAX\_H,f,c}$ represents the second power threshold, $P_{EMAX.c}$ represents the maximum transmission power of the terminal allowed on a current carrier c in a higher layer configuration, $\Delta t_{C,c}$ represents a power reduction value determined based on an allocated bandwidth position on the current carrier c, $mpr_c$ represents a linear value of maximum power reduction (MPR) implemented by the terminal, $\Delta mpr_c$ represents a power reduction value determined based on a relative bandwidth size, $\underline{a} - mpr_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $pmpr_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP} = 10log_{10} \, \Sigma \, P_{PowerClass}$, and $P_{PowerClass}$ represents the transmission power corresponding to the power class of each of the multiple antenna panels.

In the embodiment of the present disclosure, the maximum transmission power of each panel is enhanced, so that the maximum transmission power of each panel can support higher transmission of the full power, and the sum of the maximum transmission powers of the multiple panels needs to be enhanced correspondingly. In this embodiment of the present disclosure, the first power threshold and the second power threshold are re-specified, and the sum of the maximum transmission powers of the multiple panels is enhanced, so that the sum of the maximum transmission powers of the multiple panels can be higher than the maximum transmission power corresponding to the power class of the terminal, thereby improving the transmission quality of the uplink transmission and the system transmission throughput.

In the method for determining capability information of a terminal provided by the embodiment of the present disclosure, the terminal performs the STxMP in the S-DCI, and the transmission channel/signal corresponding to the STxMP includes at least one of:

a PUSCH;
a PUCCH; or
a sounding reference signal (SRS).

In the method for determining capability information of a terminal provided by the embodiment of the present disclosure, the terminal performs the STxMP in the M-DCI, and the transmission channel/signal corresponding to the STxMP includes at least one of:

a PUSCH and a PUSCH;
a PUCCH and a PUCCH;
a PUSCH and a PUCCH;
an SRS and an SRS;
an SRS and a PUCCH; or
an SRS and a PUSCH.

In the embodiment of the present disclosure, when the transmission channel/signal corresponding to the STxMP is any one of the above, and it is determined that the terminal has the capability information, a maximum transmission capability of each panel adopts the transmission of the full power.

In the method for determining capability information of a terminal provided by the embodiment of the present disclosure, the capability information and/or power information sent by the terminal is/are received based on at least one of the following signalling:

RRC signalling;
an MAC-CE; or
UCI.

It should be noted that those skilled in the art may understand that various implementations/embodiments involved in the embodiments of the present disclosure may be used in conjunction with the foregoing embodiments, or may be used independently. Whether used alone or in combination with the foregoing embodiments, the implementation principle is similar. In the embodiments of the present disclosure, a part of embodiments are described in implementations used together. Of course, those skilled in the art may understand that such an example is not a limitation on the embodiments of the present disclosure.

Based on the same concept, an embodiment of the present disclosure further provides an apparatus for determining capability information of a terminal.

It can be understood that the apparatus for determining capability information of a terminal provided by the embodiments of the present disclosure, to achieve the above functions, includes corresponding hardware structures and/or software modules to execute various functions. Combined with units and algorithm steps of various examples disclosed in the embodiments of the present disclosure, the embodiments of the present disclosure can be implemented in hardware or a combination of the hardware and computer software. Whether a certain function is performed in the hardware or the computer software driving the hardware depends on specific applications and design constraint conditions of technical solutions. Those skilled in the art can use different methods to implement the described functions for each specific application, but such implementation should not be considered to be beyond the scope of the technical solutions of the embodiments of the present disclosure.

FIG. 8 is a block diagram of an apparatus for determining capability information of a terminal shown according to an exemplary embodiment. Referring to FIG. 8, the apparatus includes a processing 101 and a sending module 102.

The processing module 101 is configured to determine that the terminal supports uplink simultaneous transmission via multi-panel (STxMP).

The processing module 101 is further configured to determine that a sum of transmission powers of different antenna panels of the terminal in the STxMP is higher than a maximum transmission power determined based on a power class of the terminal.

The processing module 101 is further configured to determine capability information of the terminal, where the capability information indicates that a maximum transmission power of each of multiple antenna panels of the terminal in the STxMP supports transmission of a full power, and the full power is determined based on a PA capability of each of the multiple antenna panels or a power class of each of the multiple antenna panels.

The sending module 102 is configured to send the capability information to a network device.

In an implementation, the processing module 101 is further configured to determine that the maximum transmission power of each of the multiple antenna panels of the terminal in the STxMP does not support the transmission of the full power, and determine that the sum of the maximum transmission powers of each of the multiple antenna panels is less than or equal to the maximum transmission power determined based on the power class of the terminal.

In an implementation, the sending module 102 is further configured to send power information to the network device, where the power information indicates the maximum transmission power of each of the multiple antenna panels or the power class of each of the multiple antenna panels.

In an implementation, the power information does not include an identifier of a panel, and the multiple antenna panels of the terminal are symmetric panels and/or asymmetric panels.

In an implementation, the multiple antenna panels of the terminal are symmetric antenna panels, and the power information includes class information of at least one of the symmetric antenna panels; or

the multiple antenna panels of the terminal are asymmetric antenna panels, and the power information includes power information of all of the asymmetric antenna panels.

In an implementation, the power information includes identifiers of the multiple antenna panels, and the identifiers of the multiple antenna panels and maximum transmission powers or power classes of the multiple antenna panels have a correspondence relationship.

In an implementation, a sum of maximum transmission powers of the multiple antenna panels of the terminal in the STxMP is less than or equal to a first power threshold, and greater than or equal to a second power threshold; where the first power threshold is greater than the second power threshold.

In an implementation, the first power threshold is determined based on a maximum transmission power of the terminal allowed on a current carrier and a transmission power corresponding to the power class of each of the multiple antenna panels.

In an implementation, the first power threshold meets:

$$P_{CMAX\_H,f,c} = MIN\{P_{EMAX.c}, P_{PowerClass} - \Delta P_{PowerClass}\}$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, where the power reduction amount is determined based on a sum of transmission powers corresponding to power classes of the multiple antenna panels.

In an implementation, the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

In an implementation, the second power threshold meets:

$$P_{CMAX\_H,f,c} = MIN\left\{10\, log_{10} \sum MIN\left[\frac{P_{EMAX.c}}{\Delta t_{C,c}}, \frac{P_{PowerClass}}{MAX(\mathrm{mpr}_c \cdot \Delta\mathrm{mpr}_c\, ,\, a-\mathrm{mpr}_c)} \cdot \Delta t_{C,c} \cdot \Delta t_{IB,c} \right. \right.$$

$$\left. \left. \cdot \Delta t_{RxSRS,c}, \frac{P_{PowerClass}}{pmpr_c}\right], P_{EMAX,CA}, P_{PowerClass,STxMP}\right\}$$

where $P_{CMAX\_H,f,c}$ represents the second power threshold, $P_{EMAX.c}$ represents the maximum transmission power of the terminal allowed on a current carrier c in a higher layer configuration, $\Delta t_{C,c}$ represents a power reduction value determined based on an allocated bandwidth position on the current carrier c, $\mathrm{mpr}_c$ represents a linear value of maximum power reduction (MPR) implemented by the terminal, $\Delta\mathrm{mpr}_c$ represents a power reduction value determined based on a relative bandwidth size, $a$ - $\mathrm{mpr}_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $pmpr_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP}$ = 10 $log_{10} \Sigma P_{PowerClass}$, and $P_{PowerClass}$ represents the transmission power corresponding to the power class of each of the multiple antenna panels.

In an implementation, the terminal performs the STxMP in single downlink control signalling (S-DCI), and a transmission channel / a signal corresponding to the STxMP includes at least one of:

a physical downlink shared channel (PUSCH);
a physical uplink control channel (PUCCH); or
a sounding reference signal (SRS).

In an implementation, the terminal performs the STxMP in multiple downlink control signalling (M-DCI), and a transmission channel / a signal corresponding to the STxMP includes at least one of:

a PUSCH and a PUSCH;

a PUCCH and a PUCCH;
a PUSCH and a PUCCH;
an SRS and an SRS;
an SRS and a PUCCH; or
an SRS and a PUSCH.

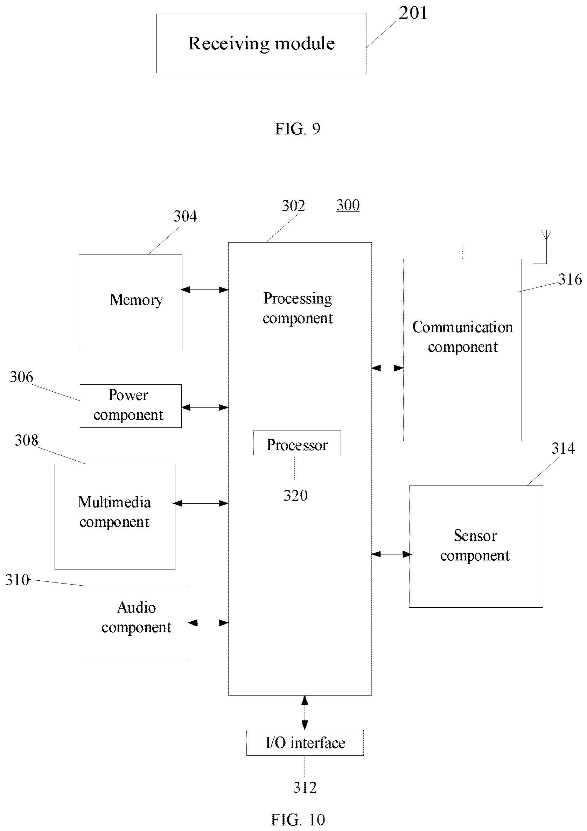

FIG. 9 is a block diagram of an apparatus for determining capability information of a terminal shown according to an exemplary embodiment. Referring to FIG. 9, the apparatus includes a receiving module 201.

The receiving module is configured to receive capability information sent by the terminal;
where the capability information indicates that the terminal performs uplink simultaneous transmission via multi-panel (STxMP), and when a sum of transmission powers of different antenna panels of the terminal in the STxMP is higher than a maximum transmission power determined based on a power class of the terminal, a maximum transmission power of each of multiple antenna panels of the terminal in the STxMP supports transmission of a full power, and the full power is determined based on a PA capability of each of the multiple antenna panels or a power class of each of the multiple antenna panels.

In an implementation, the apparatus further includes a processing module 202. The processing module 202 is configured to determine that the maximum transmission power of each of the multiple antenna panels of the terminal in the STxMP does not support the transmission of the full power, and determine that the sum of the maximum transmission powers of each of the multiple antenna panels is less than or equal to the maximum transmission power determined based on the power class of the terminal.

In an implementation, the receiving module 201 is further configured to receive power information sent by the terminal, where the power information indicates the maximum transmission power of each of the multiple antenna panels or the power class of each of the multiple antenna panels.

In an implementation, the power information does not include an identifier of a panel, and the multiple antenna panels of the terminal are symmetric panels and/or asymmetric panels.

In an implementation, the multiple antenna panels of the terminal are symmetric antenna panels, and the power information includes class information of at least one of the symmetric antenna panels; or
the multiple antenna panels of the terminal are asymmetric antenna panels, and the power information includes power information of all of the asymmetric antenna panels.

In an implementation, the power information includes identifiers of the multiple antenna panels, and the identifiers of the multiple antenna panels and maximum transmission powers or power classes of the multiple antenna panels have a correspondence relationship.

In an implementation, a sum of maximum transmission powers of the multiple antenna panels of the terminal in the STxMP is less than or equal to a first power threshold, and greater than or equal to a second power threshold;
where the first power threshold is greater than the second power threshold.

In an implementation, the first power threshold is determined based on a maximum transmission power of the terminal allowed on a current carrier and a transmission power corresponding to the power class of each of the multiple antenna panels.

In an implementation, the first power threshold meets:

$$P_{CMAX\_H,f,c} = MIN\{P_{EMAX.c}, P_{PowerClass} - \Delta P_{PowerClass}\}$$

where $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, where the power reduction amount is determined based on a sum of transmission powers corresponding to power classes of the multiple antenna panels.

In an implementation, the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

In an implementation, the second power threshold meets:

$$P_{CMAX\_H,f,c} = MIN \left\{ 10\, log_{10} \sum MIN \left[ \frac{P_{EMAX.c}}{\Delta t_{C,c}}, \frac{P_{PowerClass}}{MAX(\mathrm{mpr}_c \cdot \Delta \mathrm{mpr}_c, a - \mathrm{mpr}_c)} \cdot \Delta t_{C,c} \cdot \Delta t_{IB,c} \right. \right.$$

$$\left. \left. \cdot \Delta t_{RxSRS,c}, \frac{P_{PowerClass}}{pmpr_c} \right], P_{EMAX,CA}, P_{PowerClass,STxMP} \right\}$$

where $P_{CMAX\_H,f,c}$ represents the second power threshold, $P_{EMAX.c}$ represents the maximum transmission power of the terminal allowed on a current carrier c in a higher layer configuration, $\Delta t_{C,c}$ represents a power reduction value determined based on an allocated bandwidth position on the current carrier c, $\mathrm{mpr}_c$ represents a linear value of maximum power reduction (MPR) implemented by the terminal, $\Delta \mathrm{mpr}_c$ represents a power reduction value determined based on a relative bandwidth size, $a$ - $\mathrm{mpr}_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal (SRS) resource antenna switching configuration, $pmpr_c$ represents a power reduction value determined based on a maximum permissible exposure (MPE) in a frequency range 2 (FR2), $P_{PowerClass,STxMP}$ represents the maximum transmission power of the terminal in the STxMP, $P_{PowerClass,STxMP} = 10log_{10} \Sigma\, P_{PowerClass}$, and $P_{PowerClass}$ represents the transmission power corresponding to the power class of each of the multiple antenna panels.

In an implementation, the terminal performs the STxMP in single downlink control signalling (S-DCI), and a transmission channel / a signal corresponding to the STxMP includes at least one of:

a physical downlink shared channel (PUSCH);
a physical uplink control channel (PUCCH); or
a sounding reference signal (SRS).

In an implementation, the terminal performs the STxMP in multiple downlink control signalling (M-DCI), and a transmission channel / a signal corresponding to the STxMP includes at least one of:

a PUSCH and a PUSCH;
a PUCCH and a PUCCH;
a PUSCH and a PUCCH;
an SRS and an SRS;
an SRS and a PUCCH; or
an SRS and a PUSCH.

The specific manners in which each of the modules of the apparatus in the above embodiments performs operations have been described in detail in the embodiments related to the method, and will not be explained here in detail.
FIG. 10 is a block diagram of an apparatus for determining capability information of a terminal shown according to an exemplary embodiment. For example, the apparatus 300 may be a mobile phone, a computer, a digital broadcast terminal, a message transceiving device, a game console, a tablet device, a medical device, a fitness device, a personal digital assistant, etc.
Referring to FIG. 10, the apparatus 300 may include one or more of the following components: a processing component 302, a memory 304, a power component 306, a multimedia component 308, an audio component 310, an input/output (I/O) interface 312, a sensor component 314, and a communication component 316.
The processing component 302 typically controls the overall operation of the apparatus 300, such as operations associated with display, phone calls, data communication, camera operations, and recording operations. The processing component 302 may include one or more processors 320 to execute instructions to complete all or part of the steps in the above methods. Additionally, the processing component 302 may include one or more modules to facilitate interaction between the processing component 302 and other components. For example, the processing component 302 may include a multimedia module to facilitate interaction between the multimedia component 308 and the processing component 302.
The memory 304 is configured to store various types of data to support operations of the apparatus 300. Examples of such data include instructions, contact data, phonebook data, messages, pictures, videos, etc., for any application program or method operating on the apparatus 300. The memory 304 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.
The power component 306 provides power to various components of the apparatus 300. The power component 306 may include a power supply management system, one or more power supplies, and other components that are associated with generating, managing, and distributing power for the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen, to receive an input signal from the user. The touch panel includes one or more touch sensors to sense the touch, the slide, and the gesture on the touch panel. The touch sensor may not only sense a boundary of the touch or slide action, but also detect a duration and pressure related to the touch or slide operation. In some embodiments, the multimedia component 308 includes a front facing camera and/or a rear facing camera. When the apparatus 300 is in an operation mode, such as a shooting mode or a video mode, the front facing camera and/or the rear facing camera may receive external multimedia data. Each of the front facing camera and rear facing camera may be a fixed optical lens system or has a focal length and an optical zoom capability.

The audio component 310 is configured to output and/or input audio signals. For example, the audio component 310 includes a microphone (MIC). The microphone is configured to receivr external audio signals when the apparatus 300 is in the operating mode, such as a call mode, a recording mode, and a speech recognition mode. The received audio signals may be further stored in the memory 304 or sent via the communication component 316. In some embodiments, the audio component 310 also includes a speaker for outputting the audio signals.

The I/O interface 312 provides an interface between the processing component 302 and peripheral interface modules. The peripheral interface modules may be keyboards, click wheels, buttons, etc. These buttons may include but are not limited to: a home button, a volume button, a start button, and a lock button.

The sensor component 314 includes one or more sensors to provide various aspects of state assessment for the apparatus 300. For example, the sensor component 314 may detect an open/closed state of the apparatus 300, relative positioning of components that are for example a display and keypad of the apparatus 300. The sensor component 314 may also detect a position change of the apparatus 300 or of a component of the apparatus 300, presence or absence of the user contacting with the apparatus 300, an orientation or acceleration/deceleration of the apparatus 300, and a temperature change of the apparatus 300. The sensor component 314 may include a proximity sensor configured to detect the presence of nearby objects without any physical contact. The sensor component 314 may also include a light sensor, such as a CMOS or CCD image sensor, for use in an imaging application. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the apparatus 300 and other devices. The apparatus 300 may access a wireless network based on a communication standard, such as WiFi, 2G, 3G, or a combination of them. In an exemplary embodiment, the communication component 316 receives, via a broadcast channel, a broadcast signal or broadcast related information from an external broadcast management system. In an exemplary embodiment, the communication component 316 further includes a near-field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an exemplary embodiment, a non-transitory computer-readable storage medium including instructions is also provided, such as the memory 304 including the instructions. The above instructions may be executed by the processor 320 of the apparatus 300 to complete the above methods. For example, the non-transitory computer-readable storage medium may be a ROM, a random access memory (RAM), a CD-ROM, a magnetic tape, a floppy disk, an optical data storage device, etc.

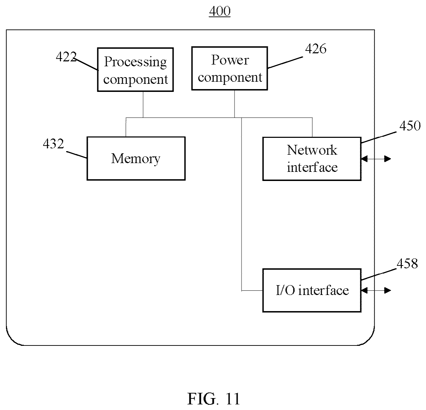

FIG. 11 is a block diagram of an apparatus for determining capability information of a terminal shown according to an exemplary embodiment. For example, the apparatus 400 may be provided as a network device. Referring to FIG. 11, the apparatus 400 includes a processing component 422, that further includes one or more processors, and memory resources represented by a memory 432, for storing instructions that is executable by the processing component 422, such as an application program. The application program stored in the memory 432 may include one or more modules that each corresponds to a set of instructions. In addition, the processing component 422 is configured to execute the instructions to perform the above methods.

The apparatus 400 may also include a power component 426 configured to perform power management of the apparatus 400, a wired or wireless network interface 450 configured to connect the apparatus 400 to the network, and an input/output (I/O) interface 458. The apparatus 400 may operate an operating system stored in the memory 432, such as Windows ServerTM, Mac OS XTM, UnixTM, LinuxTM, FreeBSDTM, or a similar operating system.

In an exemplary embodiment, a non-transitory computer-readable storage medium including instructions is also provided, such as the memory 432 including the instructions. The above instructions may be executed by the processing component 422 of the apparatus 400 to complete the above methods. For example, the non-transitory computer-readable storage medium may be a ROM, a random access memory (RAM), a CD-ROM, a magnetic tape, a floppy disk, an optical data storage device, etc.

It can be further understood that in the present disclosure, "multiple" refers to two or more, other quantifiers are similar thereto. "And/or" describes an association relationship of association objects, and represents that there may be three types of relationships. For example, A and/or B may represent: existence of A alone, existence of both A and B, and existence of B alone. The character "/" generally represents that a relationship between the context association objects is an "or" relationship. The singular forms of "a/an," "said," and "the" are also intended to include the plural form, unless the context clearly indicates other meanings.

It can be further understood that the meaning of the terms, such as "in response to," "in a case," or "if" in the present disclosure depend on the context and the actual use scenario, as used herein, the term "in response to" may be interpreted as "when," "while," or "if".

It can be further understood that the terms "first," "second," etc., are used to describe various information, but such information should not be limited to these terms. These terms are only used to distinguish the same type of information from each other and do not indicate a specific order or importance. In fact, expressions such as "first" and "second" may be used interchangeably. For example, without departing from the scope of the present disclosure, first information may also be referred to as second information, and similarly, the second information may also be referred to as the first information.

It can be further understood that in the embodiments of the present disclosure, although the operations are described in a specific order in the accompanying drawings, it should not be understood as requiring to perform these operations in a specific order or serial order as shown, or requiring to perform all shown operations to obtain the desired result. In specific environments, multitasking and parallel processing may be advantageous.

Those skilled in the art will easily come up with other implementation solutions of the present disclosure after considering the specification and practicing the present disclosure disclosed herein. The present disclosure aims to cover any variations, uses, or adaptive changes of the present disclosure, which follow general principles of the present disclosure and include common knowledge or customary technical means in the art not disclosed in the present disclosure.

It should be understood that the present disclosure is not limited to the precise structure described above and shown in the accompanying drawings, and various modifications and changes may be made without departing from its scope. The scope of the present disclosure is limited only by the scope of the appended claims.

**Claims**

1. A method for determining capability information of a terminal, performed by the terminal and comprising:

   determining that the terminal supports uplink simultaneous transmission via multi-panel, STxMP;
   determining that a sum of transmission powers of different antenna panels of the terminal in the STxMP is higher than a maximum transmission power determined based on a power class of the terminal;
   determining capability information of the terminal, wherein the capability information indicates that a maximum transmission power of each of multiple antenna panels of the terminal in the STxMP supports transmission of a full power, and the full power is determined based on a power amplifier, PA, capability or a power class of each of the multiple antenna panels; and
   sending the capability information to a network device.

2. The method of claim 1, further comprising:

   determining that the maximum transmission power of each of the multiple antenna panels of the terminal in the STxMP does not support the transmission of the full power; and
   determining that a sum of maximum transmission powers of each of the multiple antenna panels is less than or equal to the maximum transmission power determined based on the power class of the terminal.

3. The method of claim 1 or 2, further comprising:
   sending power information to the network device, wherein the power information indicates the maximum transmission power of each of the multiple antenna panels or the power class of each of the multiple antenna panels.

4. The method of claim 3, wherein the power information does not comprise an identifier of a panel, and the multiple antenna panels of the terminal are symmetric panels and/or asymmetric panels.

5. The method of claim 3, wherein the power information comprises identifiers of the multiple antenna panels, and the identifiers of the multiple antenna panels and maximum transmission powers or power classes of the multiple antenna panels have a correspondence relationship.

6. The method of claim 1, wherein a sum of maximum transmission powers of the multiple antenna panels of the terminal in the STxMP is less than or equal to a first power threshold, and greater than or equal to a second power threshold; wherein the first power threshold is greater than the second power threshold.

7. The method of claim 6, wherein the first power threshold is determined based on a maximum transmission power of the terminal allowed on a current carrier and a transmission power corresponding to the power class of each of the multiple antenna panels.

8. The method of claim 7, wherein the first power threshold meets:

$$P_{CMAX\_H,f,c} = MIN\{P_{EMAX.c}, P_{PowerClass} - \Delta P_{PowerClass}\};$$

wherein $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, wherein the power reduction amount is determined based on a sum of transmission powers corresponding to power classes of the multiple antenna panels.

9. The method of claim 6, wherein the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

10. The method of claim 9, wherein the second power threshold meets:

$$P_{CMAX\_H,f,c} = MIN\left\{10\,log_{10} \sum MIN\left[\frac{P_{EMAX.c}}{\Delta t_{C,c}}, \frac{P_{PowerClass}}{MAX(\text{mpr}_c \cdot \Delta\text{mpr}_c, \ a-\text{mpr}_c)} \cdot \Delta t_{C,c} \cdot \Delta t_{IB,c} \cdot \right. \right.$$
$$\left. \left. \Delta t_{RxSRS,c}, \frac{P_{PowerClass}}{pmpr_c}\right], P_{EMAX,CA}, P_{PowerClass,STxMP}\right\};$$

wherein $P_{CMAX\_H,f,c}$ represents the second power threshold, $P_{EMAX.c}$ represents a maximum transmission power of the terminal allowed on a current carrier c in a higher layer configuration, $\Delta t_{C,c}$ represents a power reduction value determined based on an allocated bandwidth position on the current carrier c, $\text{mpr}_c$ represents a linear value of maximum power reduction, MPR, implemented by the terminal, $\Delta\text{mpr}_c$ represents a power reduction value determined based on a relative bandwidth size, $a$ - $\text{mpr}_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal, SRS, resource antenna switching configuration, $pmpr_c$ represents a power reduction value determined based on a maximum permissible exposure, MPE, in a frequency range 2, FR2, $P_{PowerClass,STxMP}$ represents the maximum transmission power of the terminal in the STxMP, $P_{PowerClass,STxMP} = 10\,log_{10} \sum P_{PowerClass}$, and $P_{PowerClass}$ represents the transmission power corresponding to the power class of each of the multiple antenna panels.

11. The method of claim 1, wherein the terminal performs the STxMP in single downlink control signalling, S-DCI, and a transmission channel and/or a signal corresponding to the STxMP comprises at least one of:

   a physical downlink shared channel, PUSCH;
   a physical uplink control channel, PUCCH; or
   a sounding reference signal, SRS.

12. The method of claim 1, wherein the terminal performs the STxMP in multiple downlink control signalling, M-DCI, and a transmission channel and/or a signal corresponding to the STxMP comprises at least one of:

   a PUSCH and a PUSCH;

a PUCCH and a PUCCH;
a PUSCH and a PUCCH;
an SRS and an SRS;
an SRS and a PUCCH; or
an SRS and a PUSCH.

13. A method for determining capability information of a terminal, performed by a network device and comprising:

receiving capability information sent by the terminal;
wherein the capability information indicates that the terminal performs uplink simultaneous transmission via multi-panel, STxMP, and when a sum of transmission powers of different antenna panels of the terminal in the STxMP is higher than a maximum transmission power determined based on a power class of the terminal, a maximum transmission power of each of multiple antenna panels of the terminal in the STxMP supports transmission of a full power, and the full power is determined based on a power amplifier, PA, capability or a power class of each of the multiple antenna panels.

14. The method of claim 13, further comprising:

determining that the maximum transmission power of each of the multiple antenna panels of the terminal in the STxMP does not support the transmission of the full power; and
determining that a sum of maximum transmission powers of each of the multiple antenna panels is less than or equal to the maximum transmission power determined based on the power class of the terminal.

15. The method of claim 13 or 14, further comprising:
receiving power information sent by the terminal, wherein the power information indicates the maximum transmission power of each of the multiple antenna panels or the power class of each of the multiple antenna panels.

16. The method of claim 15, wherein the power information does not comprise an identifier of a panel, and the multiple antenna panels of the terminal are symmetric panels and/or asymmetric panels.

17. The method of claim 15, wherein the power information comprises identifiers of the multiple antenna panels, and the identifiers of the multiple antenna panels and maximum transmission powers or power classes of the multiple antenna panels have a correspondence relationship.

18. The method of claim 13, wherein a sum of maximum transmission powers of the multiple antenna panels of the terminal in the STxMP is less than or equal to a first power threshold, and greater than or equal to a second power threshold;
wherein the first power threshold is greater than the second power threshold.

19. The method of claim 18, wherein the first power threshold is determined based on a maximum transmission power of the terminal allowed on a current carrier and a transmission power corresponding to the power class of each of the multiple antenna panels.

20. The method of claim 19, wherein the first power threshold is determined based on:

$$P_{CMAX\_H,f,c} = MIN\{P_{EMAX.c}, P_{PowerClass} - \Delta P_{PowerClass}\};$$

wherein $P_{CMAX\_H,f,c}$ represents the first power threshold, $P_{EMAX.c}$ represents the maximum transmission power of the terminal allowed on a current carrier c in a higher layer configuration, $P_{PowerClass}$ represents the transmission power corresponding to the power class of each of the multiple antenna panels, and $\Delta P_{PowerClass}$ represents a power reduction amount, wherein the power reduction amount is determined based on a sum of transmission powers corresponding to power classes of the multiple antenna panels.

21. The method of claim 18, wherein the second power threshold is determined based on a transmission power corresponding to the power class of each of the multiple antenna panels and a maximum transmission power of the terminal in the STxMP, and the maximum transmission power of the terminal in the STxMP is determined based on a sum of transmission powers corresponding to power classes of the multiple antenna panels.

22. The method of claim 21, wherein the second power threshold is determined based on:

$$P_{CMAX\_H,f,c} = MIN\left\{10\,log_{10}\sum MIN\left[\frac{P_{EMAX,c}}{\Delta t_{C,c}}, \frac{P_{PowerClass}}{MAX(\text{mpr}_c \cdot \Delta\text{mpr}_c,\ a-\text{mpr}_c)}\cdot\Delta t_{C,c}\cdot\Delta t_{IB,c}\cdot\right.\right.$$
$$\left.\left.\Delta t_{RxSRS,c}, \frac{P_{PowerClass}}{pmpr_c}\right], P_{EMAX,CA}, P_{PowerClass,STxMP}\right\};$$

wherein $P_{CMAX\_H,f,c}$ represents the second power threshold, $P_{EMAX,c}$ represents a maximum transmission power of the terminal allowed on a current carrier c in a higher layer configuration, $\Delta t_{C,c}$ represents a power reduction value determined based on an allocated bandwidth position on the current carrier c, $\text{mpr}_c$ represents a linear value of maximum power reduction, MPR, implemented by the terminal, $\Delta\text{mpr}_c$ represents a power reduction value determined based on a relative bandwidth size, $a$ - $\text{mpr}_c$ represents an additional power reduction value determined based on hardware implementation, $\Delta t_{IB,c}$ represents a power reduction value determined based on an insertion loss, $\Delta t_{RxSRS,c}$ represents a power reduction value determined based on a channel sounding reference signal, SRS, resource antenna switching configuration, $pmpr_c$ represents a power reduction value determined based on a maximum permissible exposure, MPE, in a frequency range 2, FR2, $P_{PowerClass,STxMP}$ represents the maximum transmission power of the terminal in the STxMP, $P_{PowerClass,STxMP}$ = 10 $log_{10}\ \Sigma\ P_{PowerClass}$, and $P_{PowerClass}$ represents the transmission power corresponding to the power class of each of the multiple antenna panels.

23. The method of claim 13, wherein the terminal performs the STxMP in single downlink control signalling, S-DCI, and a transmission channel / a signal corresponding to the STxMP comprises at least one of:

a physical downlink shared channel, PUSCH;
a physical uplink control channel, PUCCH; or
a sounding reference signal, SRS.

24. The method of claim 13, wherein the terminal performs the STxMP in multiple downlink control signalling, M-DCI, and a transmission channel / a signal corresponding to the STxMP comprises at least one of:

a PUSCH and a PUSCH;
a PUCCH and a PUCCH;
a PUSCH and a PUCCH;
an SRS and an SRS;
an SRS and a PUCCH; or
an SRS and a PUSCH.

25. An apparatus for determining capability information of a terminal, comprising:

a processing module, configured to determine that the terminal supports uplink simultaneous transmission via multi-panel, STxMP;
the processing module, further configured to determine that a sum of transmission powers of different antenna panels of the terminal in the STxMP is higher than a maximum transmission power determined based on a power class of the terminal;
the processing module, further configured to determine capability information of the terminal, wherein the capability information indicates that a maximum transmission power of each of multiple antenna panels of the terminal in the STxMP supports transmission of a full power, and the full power is determined based on a power amplifier, PA, capability or a power class of each of the multiple antenna panels; and
a sending module, configured to send the capability information to a network device.

26. An apparatus for determining capability information of a terminal, comprising:

a receiving module, configured to receive capability information sent by the terminal;
wherein the capability information indicates that the terminal performs uplink simultaneous transmission via multi-panel, STxMP, and when a sum of transmission powers of different antenna panels of the terminal in the STxMP is higher than a maximum transmission power determined based on a power class of the terminal, a maximum transmission power of each of multiple antenna panels of the terminal in the STxMP supports transmission of a full power, and the full power is determined based on a power amplifier, PA, capability or a power class of each of the multiple antenna panels.

27. A communication apparatus, comprising:

    one or more processors; and
    a memory configured to store instructions executable by the one or more processors;
    wherein the one or more processors are configured to perform the method of any one of claims 1 to 12, or the method of any one of claims 13 to 24.

28. A storage medium storing instructions, wherein the instructions in the storage medium, when executed by one or more processors of a terminal, enable the terminal to perform the method of any one of claims 1 to 12, or the instructions in the storage medium, when executed by one or more processors of a network device, enable the network device to perform the method of any one of claims 13 to 24.

29. A communication system, comprising a terminal and a network device, wherein

    the terminal is configured to perform the method of any one of claims 1 to 12; and
    the network device is configured to perform the method of any one of claims 13 to 24.

FIG. 1

FIG. 2

FIG. 3

| Determine that the terminal supports uplink STxMP | S11 |

| Determine that a sum of transmission powers of different panels of the terminal in the STxMP is higher than a maximum transmission power determined from a power class of the terminal | S12 |

| Determine capability information of the terminal | S13 |

| Send the capability information to a network device | S14 |

FIG. 4

| | S21 |
| Send power information to the network device | |

FIG. 5

| | S31 |
| Receive capability information sent by a terminal | |

FIG. 6

| | S41 |
| Receive power information sent by the terminal | |

FIG. 7

| Processing module | 101 |
| Sending module | 102 |

FIG. 8

201

Receiving module

FIG. 9

304    302    300

Memory

Power
component    306

Multimedia
component    308

Audio
component    310

Processing
component

Processor

320

Communication
component    316

Sensor
component    314

I/O interface

312

FIG. 10

FIG. 11

## INTERNATIONAL SEARCH REPORT

| International application No. |
|---|
| **PCT/CN2023/075062** |

| A. | CLASSIFICATION OF SUBJECT MATTER |
|---|---|

H04W24/08(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, DWPI, ENTXTC, ETSI, IETF, VEN, WPABSC: 等级, 多, 功率, 功率的和, 功率和, 功率之和, 功率总和, 和, 面板, 天线, 最大, LEVEL, POWER, SMPTX, STXMP, SUM, MAX

| C. | DOCUMENTS CONSIDERED TO BE RELEVANT |
|---|---|

| Category* | Citation of document, with indication, where appropriate, of the relevant passages | Relevant to claim No. |
|---|---|---|
| X | RAN1 WG1. "LS on UE power limitation for STxMP in FR2"<br>*3GPP TSG-RAN WG4 Meeting # 104-e, R4-2211516*, 26 August 2022 (2022-08-26), section 1 | 1-9, 11-21, 23-29 |
| A | CN 111183593 A (LENOVO (SINGAPORE) PTE. LTD.) 19 May 2020 (2020-05-19)<br>entire document | 1-29 |
| A | US 2022217654 A1 (LG ELECTRONICS INC.) 07 July 2022 (2022-07-07)<br>entire document | 1-29 |
| A | WO 2021197149 A1 (VIVO MOBILE COMMUNICATION CO., LTD.) 07 October 2021 (2021-10-07)<br>entire document | 1-29 |
| A | WO 2021237457 A1 (QUALCOMM INC.) 02 December 2021 (2021-12-02)<br>entire document | 1-29 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 September 2023** | **11 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br>**PCT/CN2023/075062**</td></tr>
</table>

| Patent document cited in search report | | | Publication date (day/month/year) | Patent family member(s) | | | Publication date (day/month/year) |
|---|---|---|---|---|---|---|---|
| CN | 111183593 | A | 19 May 2020 | US | 2019141643 | A1 | 09 May 2019 |
| | | | | WO | 2019069132 | A1 | 11 April 2019 |
| | | | | US | 2022015045 | A1 | 13 January 2022 |
| | | | | US | 2019104477 | A1 | 04 April 2019 |
| | | | | US | 2021211998 | A1 | 08 July 2021 |
| | | | | US | 2020280934 | A1 | 03 September 2020 |
| | | | | WO | 2019069127 | A2 | 11 April 2019 |
| | | | | US | 2022377676 | A1 | 24 November 2022 |
| | | | | EP | 3669466 | A1 | 24 June 2020 |
| | | | | CN | 111164906 | A | 15 May 2020 |
| US | 2022217654 | A1 | 07 July 2022 | WO | 2020218900 | A1 | 29 October 2020 |
| WO | 2021197149 | A1 | 07 October 2021 | CN | 113472407 | A | 01 October 2021 |
| WO | 2021237457 | A1 | 02 December 2021 | | None | | |

Form PCT/ISA/210 (patent family annex) (July 2022)